# EUROPÄISCHE PATENTSCHRIFT

(11) **EP 3 819 055 B1**
(45) Veröffentlichungstag und Bekanntmachung des Hinweises auf die Patenterteilung: **20.11.2024**
(21) Anmeldenummer: 20203321.3
(22) Anmeldetag: 22.10.2020
(51) Int. Cl.: B23C 5/00, B23C 5/04, B23C 5/22, B27G 13/00, B27G 13/02, B27G 13/04, B27G 13/10, B29C 70/32

(54) **TRÄGERBAUGRUPPE, INSBESONDERE WERKZEUGTRÄGERBAUGRUPPE UND VERFAHREN ZU DEREN HERSTELLUNG**
SUPPORT ASSEMBLY, IN PARTICULAR TOOL SUPPORT ASSEMBLY, AND METHOD FOR ITS PRODUCTION
MODULE DE SUPPORT, EN PARTICULIER MODULE DE PORTE-OUTILS ET SON PROCÉDÉ DE FABRICATION

(30) Priorität: 05.11.2019 DE 102019129765; 30.04.2020 DE 102020111782
(43) Veröffentlichungstag der Anmeldung: 12.05.2021
(73) Patentinhaber: Deutsche Institute für Textil- und Faserforschung Denkendorf, 73770 Denkendorf (DE)
(72) Erfinder: Finckh, Hermann, 72649 Wolfschlugen (DE); Sirtautas, Justas, 70567 Stuttgart (DE); Fritz, Florian, 73770 Denkendorf (DE); Dinkelmann, Albrecht, 70794 Filderstadt (DE)
(74) Vertreter: Rüger Abel Patentanwälte PartGmbB

(56) Entgegenhaltungen:
- AT-A1- 509 763
- DE-A1- 102015 012 912
- FR-A1- 2 731 166
- JP-A- 2018 149 655
- JP-A- H0 976 205
- US-A1- 2019 099 816

## Beschreibung

Die Erfindung betrifft eine Trägerbaugruppe nach dem Oberbegriff des Patentanspruches 1 bzw. dem Oberbegriff des Patentanspruches 14 sowie ein Verfahren zu deren Herstellung. Die Trägerbaugruppe kann beispielsweise wenigstens ein Schneidwerkzeug als Bauteil tragen und somit als Werkzeugträgerbaugruppe ausgebildet sein. Die Trägerbaugruppe eignet sich aber auch für andere Anwendungen, bei denen wenigstens ein Bauteil insbesondere bei hohen Drehzahlen drehbar um eine Drehachse gelagert werden soll, beispielsweise für Kupplungen oder Bremsen. In diesen Fällen kann das Bauteil ein Kupplungskörper bzw. Bremsbelagkörper sein. Eine Trägerbaugruppe nach dem Oberbegriff des Patentanspruches 1 bzw. 14 ist aus der DE 10 2015 012 912 A1 bekannt.

Werkzeugträger werden beispielsweise bei Rotationswerkzeugen mit daran angeordneten Schneidplatten verwendet. Ein solcher Werkzeugträger ist zum Beispiel aus DE 10 2018 101 407 A1 bekannt. Der Werkzeuggrundkörper kann dabei aus einem Metall oder einer metallischen Legierung bestehen. Die Schneidkörper können aus polykristallinem Diamant hergestellt sein.

Solche Werkzeugträger haben eine sehr hohe Masse und niedriger Eigenfrequenzen. Aufgrund der Masse kann die Drehzahl beim Antreiben um die Drehachse nicht beliebig erhöht werden. Die hohe Masse führt auch zu einem entsprechend hohen Energieverbrauch, beispielsweise beim Positionieren des Werkzeugs mit Maschinenachsen in einer Werkzeugmaschine und beim Ändern der Drehzahl.

Anstelle von Stahl oder Stahllegierungen könnten Leichtmetalle eingesetzt werden, wie etwa Aluminium. Allerdings ist ein Werkzeugträger aus Aluminium wegen der mangelnden Festigkeit allenfalls für bestimmte Aufgaben geeignet.

Ausgehend vom Stand der Technik ist es eine Aufgabe der vorliegenden Erfindung eine Trägerbaugruppe zu schaffen, die einen besonders einfachen Aufbau aufweist und bei geringem Gewicht eine hohe Stabilität gewährleistet.

Diese Aufgabe wird durch eine Trägerbaugruppe mit den Merkmalen des Patentanspruches 1 oder des Patentanspruches 14 gelöst. Diese Aufgabe wird auch durch Verfahren zur Herstellung der Trägerbaugruppe gemäß den Patentansprüchen 13 oder 15 gelöst.

Die erfindungsgemäße Trägerbaugruppe dient dazu, wenigstens ein Bauteil drehbar um eine Drehachse zu lagern bzw. abzustützen. Bei dem wenigstens einen Bauteil handelt es sich vorzugsweise um ein Werkzeug, insbesondere ein Schneidwerkzeug. Die Trägerbaugruppe bildet in diesem Fall eine Werkzeugträgerbaugruppe. Mittels der Werkzeugträgerbaugruppe kann beispielsweise ein Fräser, ein Hobel, ein Bohrkopf oder ein anderes Werkzeug gebildet werden.

Die Trägerbaugruppe kann aber auch zum Tragen eines anderen Bauteils dienen, das bei hohen Drehzahlen um eine Drehachse drehbar gelagert werden soll, beispielsweise ein Kupplungsbelag oder ein Bremsbelag. Generell kann die Trägerbaugruppe in verschiedenen technischen Gebieten eingesetzt werden.

Die Trägerbaugruppe weist mehrere Hohlkörper auf, die in einer Axialrichtung parallel zur Drehachse nebeneinander angeordnet sind und die Drehachse jeweils umschlie-ßen. Jeder Hohlkörper hat mehrere Stegabschnitte. Zwei unmittelbar benachbarte Stegabschnitte sind jeweils unter Bildung eines gekrümmten Verbindungsabschnitts miteinander verbunden. Die Krümmung der Verbindungsabschnitte ist derart, dass sie auf der Innenseite zur Drehachse hin (Innenradius) konkav und auf der der Drehachse abgewandten Außenseite (Außenradius) konvex verläuft. Insbesondere ist die Krümmung der Verbindungsabschnitte konstant, so dass sich jeder Verbindungsabschnitt entlang eines Kreisbogens erstreckt.

Die Stegabschnitte erstrecken sich vorzugsweise gerade zwischen zwei Verbindungsabschnitten. Alternativ können die Stegabschnitte auch gekrümmt verlaufen, insbesondere zur Drehachse hin konvex und von der Drehachse weg konkav gekrümmt, wobei die Krümmung der Stegabschnitte an jeder Stelle geringer sein kann als die Krümmung der Verbindungsabschnitte und vorzugsweise geringer ist als der Kehrwert des minimalen Abstands des Stegabschnitts von der Drehachse.

Die Hohlkörper können insgesamt eine polygonähnliche Form aufweisen, wobei die Verbindungsabschnitte die Eckbereiche des Polygons bilden.

Die Trägerbaugruppe hat außerdem eine Stützeinheit, an der sich jeder Hohlkörper an mehreren in Umfangsrichtung um die Drehachse beabstandeten Stützstellen abstützt. Die Stützstellen können an wenigstens einer sich in Axialrichtung erstreckenden Komponente der Stützeinheit angeordnet sein, beispielsweise an einem Stützkörper oder mehreren individuellen Stiften.

Die Trägerbaugruppe weist außerdem wenigstens einen Aufnahmekörper auf. Vorzugsweise sind mehrere Aufnahmekörper vorhanden. Jeder Aufnahmekörper ist zum Abringen des wenigstens einen Bauteils, beispielsweise Werkzeugs oder Schneidwerkzeugs, eingerichtet. Jeder Aufnahmekörper ist mittels eines oder mittels mehrerer der vorhandenen Hohlkörper gehalten. Beispielsweise kann der wenigstens eine Aufnahmekörper unmittelbar an einem Hohlkörper angebracht sein, insbesondere an einem Stegabschnitt. Bei einem anderen Ausführungsbeispiel können die Stützeinheit und die Hohlkörper zusammenarbeiten, um den wenigstens einen Aufnahmekörper zu halten.

Die Trägerbaugruppe hat einen modularen Aufbau mit sehr wenigen Teilen. Die während des Betriebs der Trägerbaugruppe auf die Bauteile einwirkenden Kräfte können durch die Hohlkörper sehr gut abgestützt werden. Die Trägerbaugruppe bildet einen Innenhohlraum oder Innenfreiraum entlang der Drehachse, um den die Stützeinheit bzw. die Hohlkörper angeordnet sind. Die Masse der Trägerbaugruppe ist gering und ermöglicht daher hohe Drehzahlen, sowie eine hohe Dynamik bei Drehzahländerungen und/oder Positionierbewegungen der Trägerbaugruppe. Der Energieverbrauch beim Positionieren und bei Drehzahländerungen ist gering. Durch den Innenfreiraum können Späne abgeführt werden und/oder es kann Kühlschmiermittel zugeführt bzw. abgeführt werden. Die Trägerbaugruppe hat außerdem eine höhere Eigenfrequenz verglichen mit bekannten Trägerbaugruppen gleicher axialer und radialer Dimension.

Die Hohlkörper sind bevorzugt radial außen nicht von einem weiteren Außenhohlkörper in Umfangsrichtung umschlossen.

Die modulare Konstruktion der Trägerbaugruppe ermöglicht auch das individuelle Austauschen beschädigter oder verschlissener Komponenten. Der modulare Aufbau ermöglicht auch eine Skalierung unter Verwendung derselben Einzelteile. Beispielsweise kann die Anzahl der axial nebeneinander angeordneten Hohlkörper variiert werden, um die axiale Länge der Trägerbaugruppe zu variieren.

Es lassen sich einfache konstruktive Ausgestaltungen der Trägerbaugruppe realisieren, deren Herstellung keinen sehr engen Toleranzgrenzen unterworfen ist. Dadurch sind die Kosten für die Trägerbaugruppe gering.

Es ist vorteilhaft, wenn jeder Hohlkörper mindestens drei Stegabschnitte oder beispielsweise genau drei Stegabschnitte aufweist. Alle Hohlkörper können dieselbe Anzahl an Stegabschnitten oder auch verschieden viele Stegabschnitte aufweisen.

Es ist vorteilhaft, wenn sämtliche Stegabschnitte eines Hohlkörpers gleich lang sind.

Es ist außerdem bevorzugt, wenn sämtliche Hohlkörper der Trägerbaugruppe identisch ausgeführt sind.

Bei einer bevorzugten Ausführungsform ist jeder Aufnahmekörper unmittelbar an einem der Hohlkörper befestigt, insbesondere an einem Stegabschnitt auf der der Drehachse abgewandten Außenseite. Bevorzugt sind die der Drehachse abgewandten Außenseiten der Verbindungsabschnitte frei von Aufnahmekörpern.

Zumindest in den Bereichen, in denen die Hohlkörper mit einem Befestigungskörper in Kontakt stehen, sind die Hohlkörper vorzugsweise durchbrechungsfrei ausgebildet. Bevorzugt sind die Hohlkörper insgesamt durchbrechungsfrei oder vertiefungsfrei so dass die Zugkraft, die sie in Umfangsrichtung aufnehmen können, nicht stellenweise durch Löcher, Aussparungen oder andere Durchbrechungen reduziert ist.

Bei einem Ausführungsbeispiel ist der wenigstens eine Aufnahmekörper nicht mit der der Drehachse zugewandten Innenseite in Kontakt, sondern an der Außenseite eines Hohlkörpers befestigt. Der wenigstens eine Aufnahmekörper kann sich axial an einem weiteren Hohlkörper und/oder an einem weiteren Aufnahmekörper abstützen. Zusätzlich oder alternativ kann sich ein Stift der Stützeinheit in Axialrichtung durch den Aufnahmekörper, erstrecken. Dadurch wird das Fixieren des Aufnahmekörpers in Umfangsrichtung und radial zur Drehachse weiter verbessert.

Bei einigen Ausführungsbeispielen wird der wenigstens eine Aufnahmekörper mittels eines oder mehrerer der vorhandenen Hohlkörper an der Stützeinheit und insbesondere an einem Stützkörper der Stützeinheit gehalten. Der wenigstens eine Hohlkörper und der Stützkörper arbeiten somit zum Halten des wenigstens einen Aufnahmekörpers zusammen. Der Stützkörper kann ein in Umfangsrichtung um die Drehachse geschlossener Hohlkörper sein. Der Stützkörper kann sich entlang bzw. koaxial zur Drehachse erstrecken.

Vorzugsweise weist der Stützkörper in Umfangsrichtung um die Drehachse regelmäßig verteilt angeordnete Flachseiten auf, zumindest auf der der Drehachse abgewandten Außenseite des Stützkörpers. Bevorzugt erstrecken sich die Flachseiten in Axialrichtung entlang sämtlicher vorhandener Hohlkörper und/oder entlang des gesamten Stützkörpers. In Umfangsrichtung können sich die Flachseiten aneinander anschließen, so dass zwischen zwei unmittelbar benachbarten Flachseiten eine sich in Axialrichtung erstreckende Axialkante gebildet ist. Der Stützkörper kann somit in einer Querschnittsebene rechtwinklig zur Drehachse eine polygonförmige Außenkontur aufweisen. Zusätzlich oder alternativ kann in der Querschnittsebene auch die Innenkontur polygonförmig sein.

Die Anzahl der Flachseiten des Stützkörpers der Stützeinheit ist vorzugsweise größer als die Anzahl der Stegabschnitte der Hohlkörper, durch die sich der Stützkörper erstreckt. Bei einem Ausführungsbeispiel kann die Anzahl der Flachseiten zumindest oder genau doppelt so groß sein, wie die Anzahl der Stegabschnitte der Hohlkörper, durch die sich der Stützkörper erstreckt. Es ist vorteilhaft, wenn jeder Hohlkörper mit mehreren oder allen Stegabschnitten an jeweils einer zugeordneten Flachseite des Stützkörpers anliegt.

Zusätzlich oder alternativ zu dem Stützkörper kann die Stützeinheit mehrere sich in Axialrichtung erstreckende Stifte aufweisen, die vorzugsweise in Umfangsrichtung mit Abstand zueinander und insbesondere regelmäßig verteilt angeordnet sind. Die Stützeinheit kann außerdem einen Haltekörper aufweisen. Der Haltekörper ist in Axialrichtung benachbart zu den Hohlkörpern angeordnet. Optional können auch zwei Haltekörper vorhanden sein, zwischen denen die Hohlkörper angeordnet sind.

Es ist vorteilhaft, wenn mehreren oder allen gekrümmten Verbindungsabschnitten jedes Hohlkörpers jeweils einer der Stifte der Stützeinheit zugeordnet ist. Dadurch kann zwischen einem Stift und einem zugeordneten gekrümmten Verbindungsabschnitt eine Stützstelle gebildet werden. An der Stützstelle liegt die Innenseite des gekrümmten Verbindungsabschnitts an dem zugeordneten Stift an. An einem Stift können mehrere Verbindungsabschnitte unterschiedlicher Hohlkörper anliegen.

Einem oder mehreren Stegabschnitte eines Hohlkörpers oder auch mehreren der vorhandenen Hohlkörper kann jeweils ein Stift zugeordnet sein. Dieser Stift kann gegenüberliegend zu der der Drehachse abgewandten Außenseite angeordnet sein und somit außerhalb des Hohlkörpers ohne diesen zu durchsetzen. Der Stift kann sich durch einen Aufnahmekörper erstrecken, wenn an dem zugeordneten Stegabschnitt ein Aufnahmekörper angeordnet ist. Dadurch kann sich der Aufnahmekörper sowohl am Hohlkörper, als auch an dem Stift der Stützeinheit abstützen.

Bei einer bevorzugten Ausführungsform ist jeder Hohlkörper und/oder der optional vorhandene Stützkörper der Stützeinheit integral ausgebildet. Jeder Hohlkörper und/oder der optional vorhandene Stützkörper können aus einem faserverstärkten Verbundmaterial bestehen.

Bei einer bevorzugten Ausführungsform können eine erste Gruppe und eine zweite Gruppe mit jeweils wenigstens einem Hohlkörper vorhanden sein. Es ist auch möglich, mehr als zwei Gruppen von Hohlkörper vorzusehen. Die Hohlkörper einer gemeinsamen Gruppe sind vorzugsweise identisch ausgebildet und weisen jeweils dieselbe Drehlage um die Drehachse auf. Die Hohlkörper unterschiedlicher Gruppen sind in Umfangsrichtung um die Drehachse um einen Drehwinkel versetzt zueinander angeordnet. Sind mehrere Gruppen von Hohlkörpern vorhanden, wechseln sich Hohlkörper unterschiedlicher Gruppen in Axialrichtung ab. Zwei in Axialrichtung unmittelbar benachbarte Hohlkörper gehören somit zu unterschiedlichen Gruppen.

Die in Axialrichtung unmittelbar benachbart angeordneten Hohlkörper können aneinander anliegen oder alternativ mit Abstand zueinander angeordnet sein.

Eine Trägerbaugruppe gemäß einem oder mehrerer der vorstehend beschriebenen Ausführungsbeispiele kann wie folgt hergestellt werden:

Zunächst wird eine Stützeinheit bereitgestellt. Der wenigstens eine Aufnahmekörper wird an der Stützeinheit und/oder an einem der Hohlkörper angeordnet. Die Hohlkörper werden um die Drehachse herum angeordnet und stützen sich an der Stützeinheit ab. Jeder Aufnahmekörper wird an einem Stegabschnitt des Hohlkörpers und/oder der Stützeinheit gehalten. An jedem Aufnahmekörper kann ein Bauteil angebracht werden. Das Anbringen kann als letzter Schritt erfolgen, kann aber auch zu einem früheren Zeitpunkt während des Zusammenbaus bzw. der Herstellung der Trägerbaugruppe durchgeführt werden.

Bei einer Variante des Verfahrens können die Hohlkörper bereits vor dem Anordnen um die Drehachse als starre fertig hergestellte Hohlkörper bereitgestellt werden. Alternativ dazu ist es auch möglich, die Hohlkörper während des Anordnens herzustellen. Hierzu kann ein Verstärkungsfaserstrang bzw. Roving aus Verstärkungsfasern um die Stützeinheit und/oder um den wenigstens einen Aufnahmekörper gewickelt werden. Der Verstärkungsfaserstrang kann vorher oder anschließend mit einem aushärtbaren Kunststoff imprägniert bzw. getränkt werden. Anschließend kann der imprägnierte bzw. getränkte Verstärkungsfaserstrang ausgehärtet werden, um den Hohlkörper zu bilden.

Bei einer weiteren erfindungsgemäßen Trägerbaugruppe, insbesondere Werkzeugträgerbaugruppe, erstreckt sich der Hohlkörper schraubenförmig um die Drehachse. Mittels dieses Hohlkörpers kann der wenigstens eine Aufnahmekörper gehalten werden. Hierzu kann der Hohlkörper mit einer Stützeinheit zusammenarbeiten. Der wenigstens eine Aufnahmekörper kann radial zur Drehachse betrachtet zwischen einem oder mehreren Abschnitten des Hohlkörpers und der Stützeinheit angeordnet und dadurch gehalten werden. Zusätzlich oder alternativ kann der wenigstens eine Aufnahmekörper auch am Hohlkörper befestigt sein. Ein Aufnahmekörper, der am Hohlkörper befestigt ist, kann zusätzlich durch die Stützeinheit abgestützt werden, beispielsweise indem sich ein Stift der Stützeinheit durch den Aufnahmekörper erstreckt.

Bei dieser Ausführungsform wird der Hohlkörper vorzugsweise durch Wickeln wenigstens eines Verstärkungsfaserstranges um die Drehachse und um die Stützeinheit und anschließendes Aushärten eines Kunststoffmaterials, mit dem der Verstärkungsfaserstrang imprägniert bzw. getränkt ist, hergestellt. Das Tränken oder Imprägnieren des Verstärkungsfaserstranges kann vor oder nach dem Umwickeln erfolgen.

Vorteilhafte Ausgestaltungen der Erfindung ergeben sich aus den abhängigen Ansprüchen, der Beschreibung und den Zeichnungen. Nachfolgend werden bevorzugte Ausführungsbeispiele der Erfindung anhand der beigefügten Zeichnungen im Einzelnen erläutert. In den Zeichnungen zeigen:
Figuren 1 und 2 ein Ausführungsbeispiel einer Trägerbaugruppe, beispielsweise einer Werkzeugträgerbaugruppe in unterschiedlichen Ansichten,
Figuren 3 bis 8 unterschiedliche Zustände während des Herstellens der Trägerbaugruppe gemäß den Figuren 1 und 2,
Figuren 9 und 10 ein weiteres Ausführungsbeispiel einer Trägerbaugruppe, beispielsweise Werkzeugträgerbaugruppe, in unterschiedlichen Ansichten,
Figuren 11 bis 16 unterschiedliche Zustände beim Herstellen der Trägerbaugruppe gemäß den Figuren 9 und 10,
Figuren 17 und 18 ein weiteres Ausführungsbeispiel einer Trägerbaugruppe, beispielsweise Werkzeugträgerbaugruppe, in unterschiedlichen Ansichten,
Figuren 19 und 20 Ausführungsbeispiele für Aufnahmekörper und Bauteile, beispielsweise Werkzeuge, zur Verwendung mit der Trägerbaugruppe gemäß den Figuren 17 und 18,
Figuren 21 bis 23 unterschiedliche Zustände beim Herstellen der Trägerbaugruppe gemäß den Figuren 17 und 18,
Figuren 24 und 25 ein weiteres Ausführungsbeispiel einer Trägerbaugruppe, beispielsweise Werkzeugträgerbaugruppe, in unterschiedlichen Ansichten,
Figur 26 einen Aufnahmekörper und ein Bauteil, beispielsweise Werkzeug, zur Verwendung mit der Trägerbaugruppe gemäß den Figuren 24 und 25,
Figuren 27 bis 30 unterschiedliche Zustände beim Herstellen der Trägerbaugruppe gemäß den Figuren 24 und 25,
Figuren 31 bis 34 unterschiedliche Zustände beim Herstellen der Trägerbaugruppe gemäß den Figuren 24 und 25 bei einem alternativen Verfahrensablauf,
Figuren 35 und 36 ein weiteres Ausführungsbeispiel einer Trägerbaugruppe in unterschiedlichen Ansichten,
Figur 37 eine schematische Prinzipdarstellung eines Ausführungsbeispiels einer Trägerbaugruppe mit einem schraubenförmigen Hohlkörper und
Figuren 38 bis 40 jeweils eine schematische Prinzipdarstellung unterschiedlicher Formen für die Realisierung einer Trägerbaugruppe.

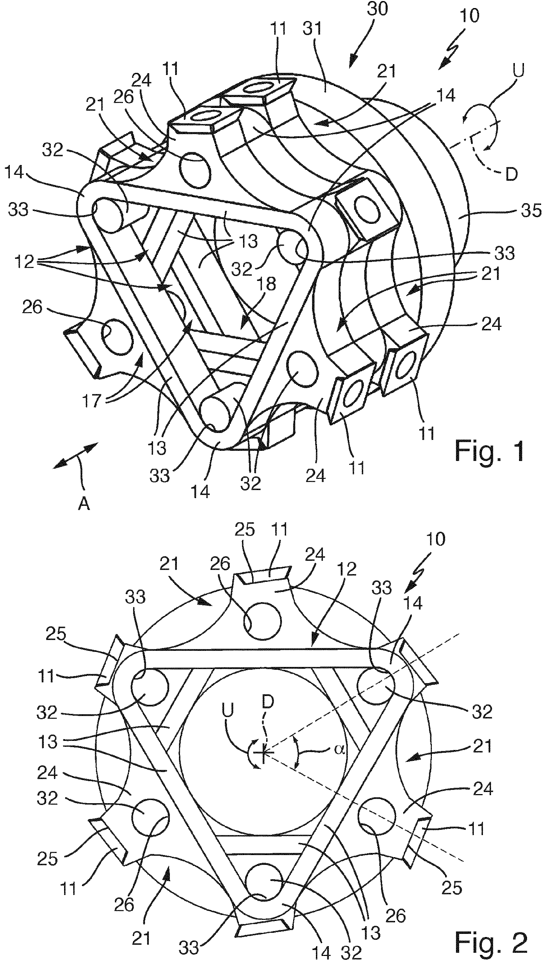

In den Figuren 1 und 2 ist ein Ausführungsbeispiel einer Trägerbaugruppe 10 veranschaulicht. Die Trägerbaugruppe 10 ist dazu eingerichtet, wenigstens ein Bauteil 11 zu tragen, das mit Abstand zu einer Drehachse D angeordnet ist. Die Trägerbaugruppe 10 ist außerdem dazu eingerichtet, drehend um die Drehachse D angetrieben zu werden. Beispielsweise kann die Trägerbaugruppe 10 als Werkzeugträgerbaugruppe ausgebildet sein, bei der das Bauteil 11 durch ein Werkzeug gebildet ist. Die Werkzeugträgerbaugruppe kann dazu eingerichtet sein, in eine Werkzeugspindel einer Werkzeugmaschine eingespannt zu werden.

Die Richtung parallel zur Drehachse D wird als Axialrichtung A bezeichnet. Eine Richtung um die Drehachse D herum wird als Umfangsrichtung U bezeichnet.

Die Bauteile 11 können beispielsweise als Werkzeuge und insbesondere Schneidwerkzeuge oder Schneidplatten ausgeführt sein. Sie sind in Umfangsrichtung U und/oder in Axialrichtung A mit Abstand zueinander angeordnet. Die Schneidkanten der Schneidwerkzeuge können denselben Abstand von der Drehachse D aufweisen. Die derart gebildete Werkzeugträgerbaugruppe kann beispielsweise einen Fräser, einen Bohrer, einen Hobel oder dergleichen bilden.

Die Trägerbaugruppe 10 kann auch auf anderen technischen Gebieten als den drehend angetriebenen Werkezeugen eingesetzt werden, insbesondere bei sämtlichen anderen Anwendungen, bei denen ein Bauteil drehend um eine Drehachse D an einem Außenumfang gelagert werden muss, beispielsweise bei Bremsen, Kupplungen oder ähnlichem.

Die Trägerbaugruppe 10 weist mehrere Hohlkörper 12 auf. Die Hohlkörper 12 sind vorzugsweise identisch ausgebildet und können eine polygonähnliche Gestalt haben. Beim Ausführungsbeispiel gemäß den Figuren 1 und 2 hat jeder Hohlkörper 12 eine im Wesentlichen dreieckförmige oder dreieckähnliche Gestalt.

Jeder Hohlkörper 12 hat mehrere und beispielsgemäß drei Stegabschnitte 13. Beim Ausführungsbeispiel sind die Stegabschnitte 13 geradlinig ausgebildet. Die Stegabschnitte 13 haben dieselbe Länge. Zwei unmittelbar benachbarte Stegabschnitte 13 sind über jeweils einen gekrümmten Verbindungsabschnitt 14 miteinander verbunden. Der gekrümmte Verbindungsabschnitt 14 erstreckt sich beim Ausführungsbeispiel entlang eines Kreisbogens. Die Krümmung des Verbindungsabschnitts 14 ist derart ausgebildet, dass sich auf der der Drehachse D zugewandten Seite des Verbindungsabschnitts 14 eine konkave Form und auf der von der Drehachse D abgewandten Außenseite eine konvexe Form des Verbindungsabschnitts 14 ergibt.

Beim Ausführungsbeispiel ist jeder Hohlkörper 12 integral ohne Naht- und Fügestelle ausgebildet. Der Hohlkörper 12 besteht beispielsgemäß aus einem Verbundmaterial, das in einer Kunststoffmatrix eingebettete Verstärkungsfasern aufweist. Die Verstärkungsfasern erstrecken sich vorzugsweise in Verlaufsrichtung des Hohlkörpers 12 um die Drehachse D gestreckt, das heißt in den Stegabschnitten 13 im Wesentlichen geradlinig und in den Verbindungsabschnitten 14 entlang des Kreisbogens des jeweiligen Verbindungsabschnitts 14. Eine Vielzahl von Verstärkungsfasern sind in Axialrichtung A und/oder in einer Richtung rechtwinklig zur Drehachse D nebeneinander angeordnet.

Vorzugsweise ist die Wandstärke des Hohlkörpers 12 in den Stegabschnitten 13 und in den Verbindungsabschnitten 14 gleich groß. Der Querschnitt der Hohlkörper 12 ist beispielsgemäß rechteckig, wobei die Abmessung in Axialrichtung A größer ist als rechtwinklig zur Axialrichtung A. Die Hohlkörper 12 weisen beispielsgemäß keine Aussparung oder Durchbrechung auf. Dadurch können sich die Verstärkungsfasern unterbrechungsfrei im Wesentlichen in Umfangsrichtung U um die Drehachse D erstrecken und die Dichte der Verstärkungsfasern kann im Wesentlichen konstant sein.

Die Hohlkörper 12 sind beim Ausführungsbeispiel in zwei oder mehr Gruppen unterteilt. Beim Ausführungsbeispiel gemäß den Figuren 1 und 2 sind eine erste Gruppe 17 und eine zweite Gruppe 18 vorhanden, wobei jede Gruppe 17, 18 einen oder mehrere Hohlkörper 12 aufweist. Die Anzahl der Hohlkörper 12 in jeder Gruppe 17, 18 kann gleich oder unterschiedlich groß sein. Bei dem in den Figuren 1 und 2 veranschaulichten Ausführungsbeispiel der Trägerbaugruppe 10 weist die erste Gruppe 17 zwei Hohlkörper 12 auf, während die zweite Gruppe 18 lediglich einen Hohlkörper 12 aufweist. Die Anzahl der Hohlkörper pro Gruppe 17, 18 kann gleich oder unterschiedlich groß sein und unterscheidet sich vorzugsweise maximal um Eins.

Die Hohlkörper 12 einer gemeinsamen Gruppe 17 bzw. 18 sind in Axialrichtung A fluchtend angeordnet. Sie weisen in Umfangsrichtung U um die Drehachse D jeweils dieselbe Drehlage bzw. Drehausrichtung auf.

Die Hohlkörper 12 unterschiedlicher Gruppen 17, 18 sind um einen Drehwinkel α in Umfangsrichtung U versetzt bzw. zueinander gedreht angeordnet. Der Drehwinkel α beträgt beim Ausführungsbeispiel 60°. Der Betrag des Drehwinkels α kann so gewählt werden, dass in einer Ebene rechtwinklig zur Drehachse D betrachtet jede Seitenhalbierende durch einen Stegabschnitt 13 der Hohlkörper 12 der ersten Gruppe 17 eine Winkelhalbierende durch die Verbindungsabschnitte 14 der Hohlkörper 12 der zweiten Gruppe 18 bildet.

Vorzugsweise wird der Drehwinkel α wie folgt berechnet: α=180°/(n*g), wobei n die Anzahl der Stegabschnitte 13 der Hohlkörper 12 und g die Anzahl der Gruppen ist.

Die Hohlkörper 12 sind um die Drehachse D derart angeordnet, dass die Verbindungsabschnitte 14 mit Blick entlang der Drehachse D bzw. in einer Projektionsebene rechtwinklig zur Drehachse D in Umfangsrichtung U gleichmäßig verteilt angeordnet sind (Figur 2). In Axialrichtung A sind die Hohlkörper 12 unterschiedlicher Gruppen 17, 18 abwechselnd angeordnet. Zwischen zwei Hohlkörpern 12 der ersten Gruppe 17 ist jeweils ein Hohlkörper 12 der zweiten Gruppe 18 angeordnet.

Die Trägerbaugruppe 10 weist außerdem wenigstens einen Aufnahmekörper 21 auf. Beim Ausführungsbeispiel gemäß Figuren 1 und 2 ist an jedem Stegabschnitt 13 jedes Hohlkörpers 12 ein Aufnahmekörper 21 befestigt, beispielsweise durch eine stoffschlüssige Verbindung und/oder eine Haftverbindung.

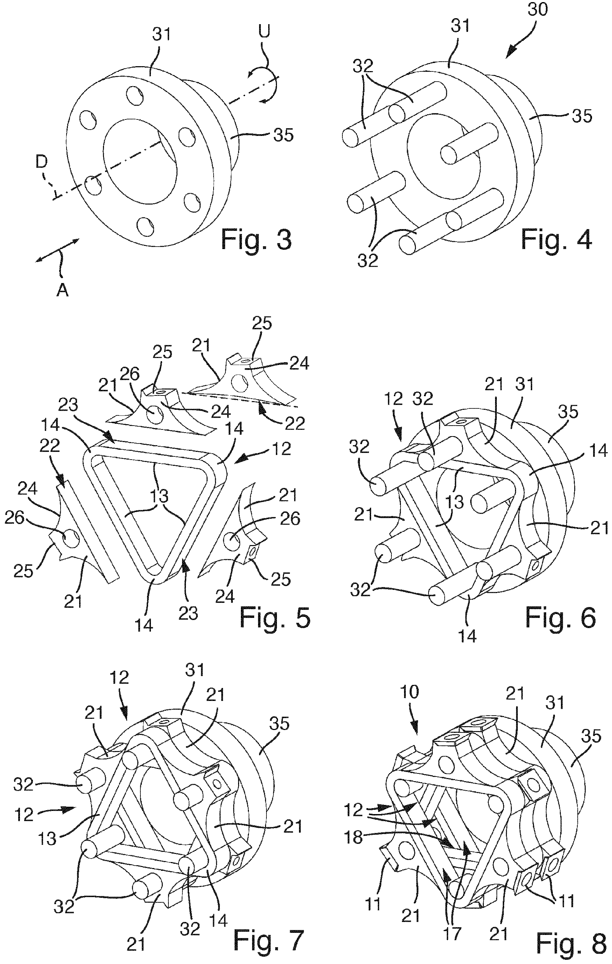

Der Aufnahmekörper 21 hat eine Grundfläche 22, mit der er auf einer Außenfläche 23 des zugeordneten Stegabschnitts 13 flächig anliegt bzw. flächig verbunden wird (Figur 5).

Der Aufnahmekörper 21 hat beim Ausführungsbeispiel einen zentralen Teil 24. An dem zentralen Teil 24 ist auf der der Grundfläche 22 entgegengesetzten Seite eine Aufnahme 25 zum Anbringen des Bauteils 11 und beispielsgemäß des Schneidwerkzeugs angeordnet oder gebildet. Das Bauteil 11 bzw. Schneidwerkzeug kann durch eine stoffschlüssige Verbindung und/oder Haftverbindung und/oder formschlüssige Verbindung und/oder kraftschlüssige Verbindung an der Aufnahme 25 angeordnet werden. Beispielsweise kann das Bauteil 11 angeschraubt oder angelötet werden.

Im zentralen Teil 24 weist der Aufnahmekörper 21 die größte Höhe auf, betrachtet in einer Richtung rechtwinklig zu seiner Grundfläche 22 bzw. rechtwinklig zur Außenfläche 23, an der der Aufnahmekörper 21 angebracht ist. Die Höhe nimmt ausgehend vom zentralen Teil 24 in Umfangsrichtung U um die Drehachse D bzw. entlang des zugeordneten Stegabschnitts 13 zu beiden Seiten hin ab. Vorzugsweise erstreckt sich der Aufnahmekörper 21 entlang der kompletten Erstreckung eines Stegabschnitts 13 zwischen den beiden Verbindungsabschnitten 14, die den Stegabschnitt 13 begrenzen.

Der zentrale Teil 24 des Aufnahmekörpers 21 wird vorzugsweise durch ein Loch 26 in Axialrichtung A vollständig durchsetzt.

Die Trägerbaugruppe 10 weist außerdem eine Stützeinheit 30 auf. Die Stützeinheit 30 ist dazu eingerichtet, die Hohlkörper 12 abzustützen bzw. zu tragen.

Bei dem in den Figuren 1 und 2 veranschaulichten Ausführungsbeispiel weist die Stützeinheit 30 einen in Axialrichtung A neben den Hohlkörpern 12 angeordneten Haltekörper 31 auf. Der Haltekörper kann eine scheibenförmige oder ringförmige, beispielsweise kreisringförmige Gestalt aufweisen. Der Haltekörper 31 ist koaxial zur Drehachse D angeordnet.

Zu der Stützeinheit 30 gehören außerdem mehrere und beispielsgemäß sechs Stifte 32, die sich in Axialrichtung A erstrecken und mit einem Ende am Haltekörper 31 befestigt sind. Die Stifte sind mit Abstand zur Drehachse D und in Umfangsrichtung U mit Abstand zueinander angeordnet. Beispielsgemäß sind die Mittelachsen der Stifte 32 auf einer gemeinsamen Zylinderfläche um die Drehachse D angeordnet. Auf den Stiften 32 können sich die Hohlkörper 12 abstützen.

Beispielsgemäß ist jeder Hohlkörper 12 an mehreren Stützstellen 33 abgestützt. Die Stützstellen sind in Umfangsrichtung U verteilt und vorzugsweise regelmäßig verteilt angeordnet. Die Stützstellen 33 sind zwischen mehreren Stiften 32 und mehreren oder allen Verbindungsabschnitten 14 jedes Hohlkörpers 12 gebildet. An jeder Stützstelle 33 liegt eine der Drehachse D zugewandte Innenseite des Verbindungsabschnitts 14 an einem Stift 32 an. Beispielsgemäß ist eine erste Untermenge der Stifte 32 zur Bildung der Stützstellen 33 mit der ersten Gruppe 17 der Hohlkörper 12 eingerichtet, während eine sich von der ersten Untermenge unterscheidende zweite Untermenge der Stifte 32 zur Bildung der Stützstellen 33 mit der zweiten Gruppe 18 der Hohlkörper 12 eingerichtet ist.

Wie auch zu erkennen ist, erstrecken sich die zur ersten Untermenge gehörenden Stifte 32 außerhalb des Innenbereichs der Hohlkörper 12 der zweiten Gruppe 18 und die zur zweiten Untermenge gehörenden Stifte 32 erstrecken sich außerhalb des Innenbereichs der Hohlkörper 12 der ersten Gruppe 17. Die sich außerhalb eines Hohlkörpers 12 erstreckenden Stifte 32 durchsetzen die Löcher 26 der Aufnahmekörper 21. Die Aufnahmekörper 21 werden daher sowohl an einem Hohlkörper 12, als auch an einem Stift 32 der Stützeinheit 30 abgestützt.

An der Stützeinheit 30 und beispielsgemäß dem Haltekörper 31 ist vorzugsweise ein Spannkörper 35 angeordnet, der integral mit dem Haltekörper 31 ausgebildet oder am Haltekörper 31 befestigt sein kann. Der Spannkörper 35 ist zum Einspannen in ein Spannfutter einer Werkzeugmaschine eingerichtet. Der Spannkörper 35 kann beispielsweise als Schaft, insbesondere als Hohlschaftkegel ausgebildet sein. Die Ausgestaltung des Spannkörpers 35 kann einem definierten Standard entsprechen. Der Spannkörper 35 erstreckt sich entlang oder koaxial zur Drehachse D. Beispielsgemäß ist der Spannkörper 35 auf der zu den Stiften 32 entgegengesetzten Seite des Haltekörpers 31 angeordnet.

Im Abwandlung zu dem in den Figuren 1 und 2 dargestellten Ausführungsbeispiel kann der Haltekörper 31 entfallen. Jeder der Stifte 32 erstreckt sich durch mindestens einen Aufnahmekörper 21 und liegt an mindestens einer Stützstelle 33 an einem Verbindungsabschnitt 14 an.

In den Figuren 3 bis 8 ist schematisch die Herstellung der Trägerbaugruppe 10 des Ausführungsbeispiels aus den Figuren 1 und 2 veranschaulicht. Zunächst wird der Haltekörper 31 der Stützeinheit 30 bereitgestellt, an dem die Stifte 32 angeordnet werden (Figuren 3 und 4). Außerdem werden eine Anzahl von Hohlkörpern 12 bereitgestellt, beispielsgemäß drei Hohlkörper 12. An jedem Hohlkörper 12 werden die Aufnahmekörper 21 an den Stegabschnitten 13 angeordnet. Wie erläutert weist beim Ausführungsbeispiel jeder Hohlkörper 12 drei Stegabschnitte 13 auf, an denen jeweils ein Aufnahmekörper 21 befestigt wird (Figur 5).

Wie es in Figur 5 gezeigt ist, kann die Grundfläche 22 des Aufnahmekörpers 21 in einer Ebene verlaufen, die parallel zur Ebene ausgerichtet ist, in der sich die Außenfläche 23 des zugeordneten Stegabschnitts 13 erstreckt. Alternativ dazu kann die Grundfläche 22 auch einen konkav oder konvex gekrümmten Verlauf aufweisen und der Aufnahmekörper 21 kann derart an den Stegabschnitt 13 angebracht werden, dass der Aufnahmekörper 21 elastisch verformt wird, bis sich die Grundfläche 22 in der Ebene erstreckt, in der auch die Außenfläche 23 des zugeordneten Stegabschnitts 13 angeordnet ist. In diesem elastisch verformten Zustand erzeugt der Aufnahmekörper 21 Kraft auf den Hohlkörper 12 bzw. den Stegabschnitt 13.

Die mit den Aufnahmekörpern 21 versehenen Hohlkörper 12 werden anschließend an der Stützeinheit 30 angeordnet (Figuren 6 bis 8). Dabei werden die Hohlkörper 12 entsprechend der Zugehörigkeit zur ersten Gruppe 17 bzw. zur zweiten Gruppe 18 in der gewünschten Drehlage auf die Stifte 32 in Axialrichtung A aufgesteckt.

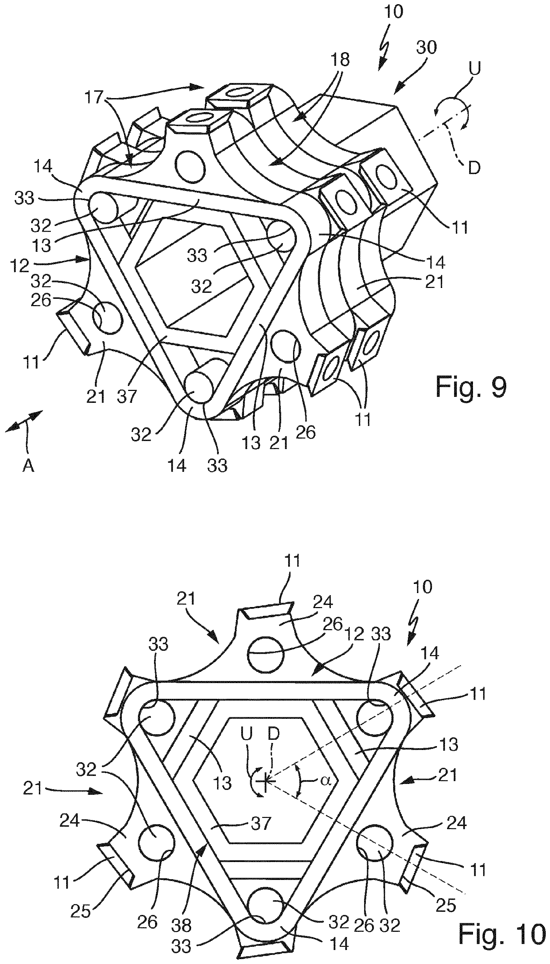

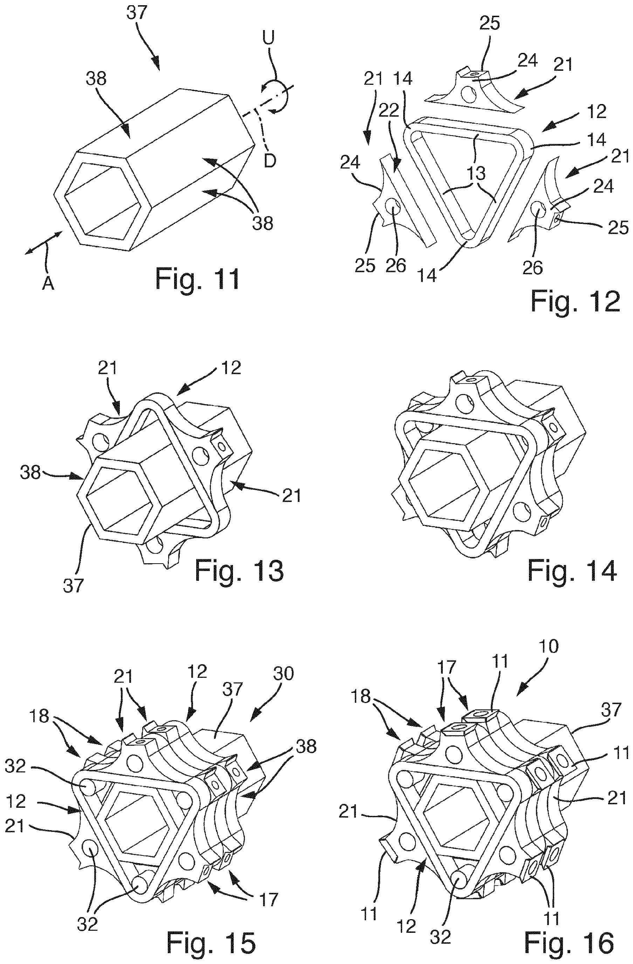

In den Figuren 9 und 10 ist ein weiteres Ausführungsbeispiel veranschaulicht. Im Unterschied zu dem bisherigen Ausführungsbeispiel ist die Stützeinheit 30 anders ausgeführt. Die Stützeinheit 30 weist beispielsgemäß anstelle des Haltekörpers 31 einen sich entlang bzw. koaxial zur Drehachse erstreckenden Stützkörper 37 auf. Der Stützkörper 37 ist in Figur 11 separat veranschaulicht. Er weist an einer von der Drehachse D abgewandten Außenseite mehrere in Umfangsrichtung U gleichmäßig verteilt angeordnete Flachseiten 38 auf. Beispielsgemäß erstrecken sich die Flachseiten 38 in Axialrichtung A vollständig entlang des gesamten Stützkörpers 37. Die Flachseiten 38 haben eine Länge in Axialrichtung A, die zumindest so groß ist, wie die Gesamtlänge der in Axialrichtung A nebeneinander angeordneten Hohlkörper 12. Der Stützkörper 37 erstreckt sich vollständig in Axialrichtung A durch sämtliche Hohlkörper 12 hindurch.

Die Außenkontur des Stützkörpers 37 entspricht beispielsgemäß einer Innenkontur, die durch eine Projektion sämtlicher Innenkonturen aller Hohlkörper 12 auf eine Projektionsfläche rechtwinklig zur Drehachse D begrenzt ist. Beim Ausführungsbeispiel weist der Stützkörper 37 eine Außenkontur auf, die in einer Ebene rechtwinklig zur Drehachse D betrachtet einem regelmäßigen Sechseck entspricht. Beispielsgemäß gehen zwei unmittelbar benachbarte Flachseiten 38 unter Bildung einer in Axialrichtung A verlaufenden Kante ineinander über. Die Flachseiten 38 könnten alternativ hierzu in Umfangsrichtung U durch einen Radius oder eine andere Übergangsgeometrie miteinander verbunden sein.

Die Anzahl der Flachseiten 38 ist vorzugsweise mindestens oder genau doppelt so groß wie die Anzahl der Stegabschnitte 13 der Hohlkörper 12.

Der Stützkörper 37 ist vorzugsweise ebenfalls als Hohlkörper ausgebildet, um das Gewicht der Trägerbaugruppe 10 gering zu halten. Beispielsweise kann der Stützkörper 37 innen ebenfalls einen polygonalen Querschnitt aufweisen.

Wie es in den Figuren 9 und 10 veranschaulicht ist, kann die Stützeinheit 30 zusätzlich zu dem Stützkörper 37 auch mehrere sich in Axialrichtung A erstreckende Stifte 32 aufweisen, analog zum Ausführungsbeispiel, wie es im Zusammenhang mit den Figuren 1 bis 8 erläutert wurde. Im Unterschied zum vorherigen Ausführungsbeispiel sind die Stifte 32 nicht mit einem Haltekörper 31 verbunden, sondern jeder Stift erstreckt sich durch mindestens einen Aufnahmekörper 21 und liegt an mindestens einer Stützstelle 33 an einem Verbindungsabschnitt 14 an.

Die Stifte 32 könnten bei einem abgewandelten, nicht gezeigten Ausführungsbeispiel auch entfallen. Die Aufnahmekörper 21 sind dann nicht unmittelbar an der Stützeinheit 30 gehalten oder abgestützt.

Ansonsten entspricht der Aufbau dem ersten Ausführungsbeispiel, so dass auf die vorstehenden Erläuterungen verwiesen werden kann.

Bei allen vorstehend erläuterten Ausführungsbeispielen bildet jeder Hohlkörper 12 gemeinsam mit mindestens einem und beispielsgemäß drei Aufnahmekörpern 21 und optional jeweils einem daran angeordneten Bauteil 11 eine Baueinheit. Alle vorhandenen Baueinheiten können identisch aufgebaut sein. Die Anzahl dieser Baueinheiten, die in Axialrichtung A nebeneinander angeordnet werden können, kann variieren, abhängig von der gewünschten axialen Länge der Trägerbaugruppe 10 bzw. eines beim Ausführungsbeispiel anhand der Trägerbaugruppe 10 gebildeten Werkezeugs. Die Baueinheiten können um den Drehwinkel α in Umfangsrichtung U versetzt in zwei oder mehr Gruppen angeordnet werden.

In den Figuren 11 bis 16 ist das Herstellen einer Trägerbaugruppe 10 gemäß dem Ausführungsbeispiel aus den Figuren 9 und 10 schematisch veranschaulicht. Der Stützkörper 37 wird bereitgestellt. Es werden mehrere Baueinheiten basierend auf jeweils einem Hohlkörper 12 und mehreren Aufnahmekörpern 21 hergestellt (Figur 12). Die Baueinheiten werden dann auf dem Stützkörper 37 in der gewünschten Drehlage in Umfangsrichtung U auf dem Stützkörper 37 angeordnet, wie es in den Figuren 13 bis 15 veranschaulicht ist. Die Stifte 32 werden nach dem Anordnen der Baueinheiten in Axialrichtung A eingesteckt (Figur 15). Vorzugsweise werden am Ende des Herstellungsverfahrens die Bauteile 11 und beispielsweise Werkzeuge bzw. Schneidwerkzeuge an den Aufnahmekörpern 21 an der jeweiligen Aufnahme 25 befestigt (Figur 16) .

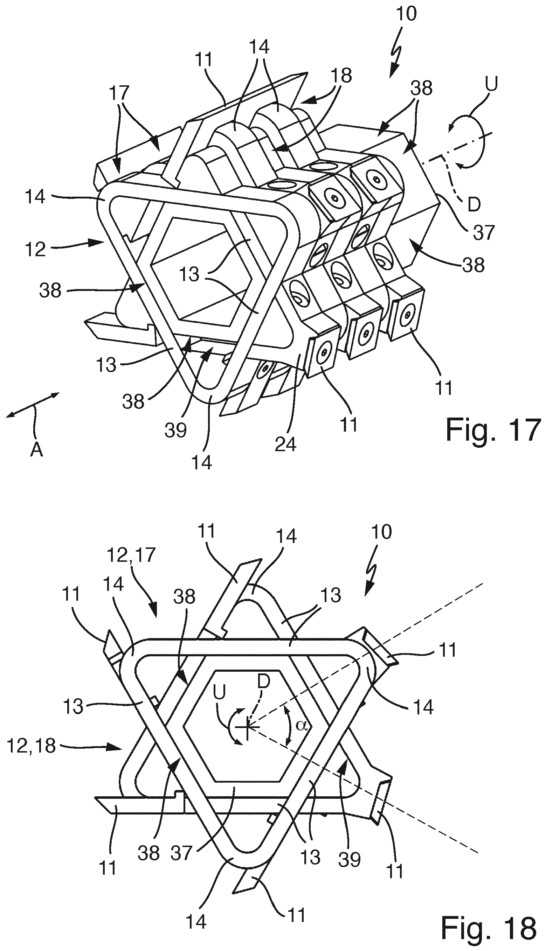

Figuren 17 und 18 zeigen ein weiteres Ausführungsbeispiel der Trägerbaugruppe 10. Bei diesem Ausführungsbeispiel ist die Stützeinheit 30 durch den Stützkörper 37 gebildet. Die Hohlkörper 12 sind analog zu den bisherigen Ausführungsbeispielen ausgebildet und in einer ersten Gruppe 17 und einer zweiten Gruppe 18 um die Drehachse D jeweils versetzt angeordnet. Die Hohlkörper 12 liegen mit den Stegabschnitten 13 an jeweils einer zugeordneten Flachseite 38 der Stützkörper 37 an. Die Verbindungsabschnitte 14 weisen jeweils einen Abstand zu der in Radialrichtung benachbarten Flachseite 38 des Stützkörpers 37 auf. Dadurch ist in Radialrichtung zwischen dem Verbindungsabschnitt 14 und der zugeordneten Flachseite 38 ein Zwischenraum 39 gebildet. Wenn jede Gruppe 17, 18 mehrere Hohlkörper 12 aufweist, fluchten deren Zwischenräume 39 in Axialrichtung A.

Jeder Zwischenraum 39 oder die in Axialrichtung miteinander fluchtenden Zwischenräume 39 können dazu verwendet werden, einen Aufnahmekörper 21 zu halten. Der Aufnahmekörper 21 wird somit zwischen den in Axialrichtung A nebeneinander angeordneten Verbindungsabschnitten 14 der gleichen Gruppe 17, 18 von Hohlkörpern 12 und der in Radialrichtung gegenüberliegenden Flachseite 38 des Stützkörpers 37 gehalten. An dem Aufnahmekörper 21 können die Bauteile 11 (beispielsgemäß Werkzeuge bzw. Schneidwerkzeuge) angeordnet werden.

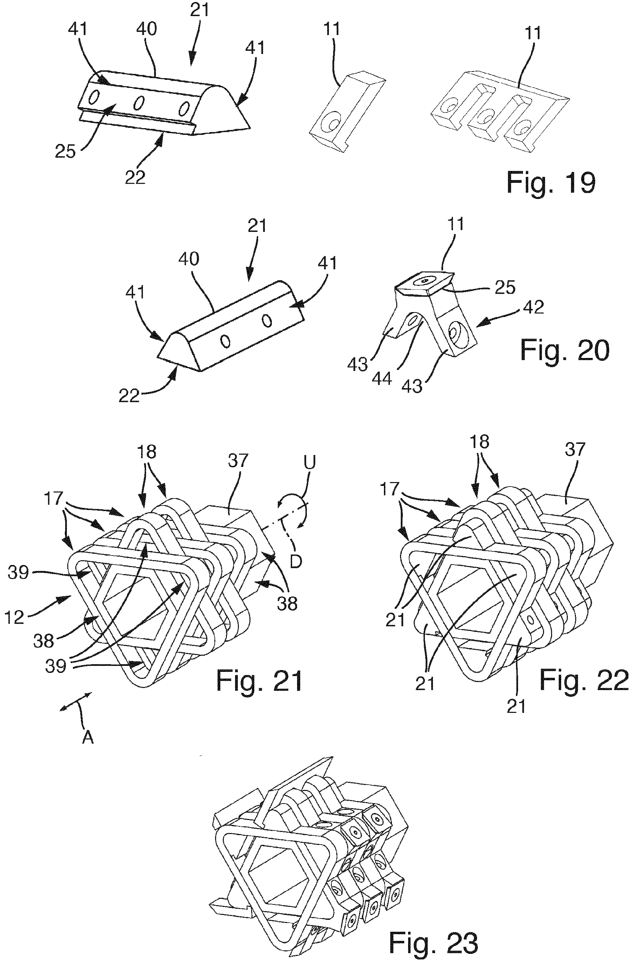

In den Figuren 19 und 20 sind unterschiedliche Ausführungsformen von Aufnahmekörpern 21 veranschaulicht, die bei dem Ausführungsbeispiel der Trägerbaugruppe 10 gemäß den Figuren 17 und 18 verwendet werden können. Die Aufnahmekörper haben jeweils eine Grundfläche 22, die sich vorzugsweise in einer Ebene erstreckt und die an einer Flachseite 38 des Stützkörpers 37 angeordnet werden kann. Die Querschnittskontur des Aufnahmekörpers 21 ist an die Kontur des Zwischenraums 39 angepasst. An der der Grundfläche 22 entgegengesetzten Seite hat der Aufnahmekörper 21 beispielsgemäß einen Kamm oder Scheitel 40, der sich in Axialrichtung A erstreckt und rechtwinklig zur Axialrichtung A eine kreisbogenförmige Kontur aufweist, deren Radius dem Innenradius der gekrümmten Verbindungsabschnitte 14 entspricht. An den Scheitel 40 schließt sich an jeder Seite eine Flanke 41 an, wobei die beiden Flanken 41 einen Winkel einschließen können, der dem Winkel entspricht, den zwei sich an einen gemeinsamen Verbindungsabschnitt 14 angrenzende Stegabschnitte 13 des Hohlkörpers 12 einschließen. Wenigstens an einer der beiden Flanken 41 kann eine Aufnahme 25 zum Anbringen eines oder mehrerer Bauteile 11 vorhanden sein. Die Geometrie der Aufnahme 25 ist an die Geometrie der Bauteile 11 angepasst. Wie es in Figur 19 beispielhaft schematisch gezeigt ist, können mehrere schmale einzelne Bauteile 11 oder ein einziges breiteres Bauteil 11 an der Aufnahme 25 befestigt werden.

In Figur 20 ist eine weitere Möglichkeit zum Anordnen eines Bauteils 11 an dem Aufnahmekörper 21 veranschaulicht. Anstatt das Bauteil 11 unmittelbar den Aufnahme 25 anzuordnen, kann ein Adapterkörper 42 bereitgestellt werden, der die Aufnahme 25 für das Bauteil 11 aufweist. Der Adapterkörper 42 hat beim Ausführungsbeispiel zwei Fußteile 43, die dazwischen einen Freiraum 44 begrenzen. Die beiden Fußteile 43 können an die Flanken 41 des Aufnahmekörpers 21 angelegt und der Adapterkörper 42 am Aufnahmekörper 21 befestigt werden. Der Adapterkörper 42 kann in Axialrichtung A auf einer oder beiden Seiten durch jeweils einen vorhandenen Hohlkörper 12 und insbesondere einen Verbindungsabschnitt 14 eins Hohlkörpers 12 abgestützt werden.

In den Figuren 21 bis 23 ist schematisch die Herstellung der Trägerbaugruppe 10 für das Ausführungsbeispiel gemäß den Figuren 17 bis 20 veranschaulicht. Figur 21 zeigt das Anordnen der Hohlkörper 12 in den zwei Gruppen 17, 18, die jeweils um en Drehwinkel α zueinander versetzt sind. Im Anschluss daran können die Aufnahmekörper 21 in Axialrichtung A durch die fluchtenden Zwischenräume 39 geschoben werden (Figur 22). Schließlich können die Bauteile 11 (Hier: Schneidwerkzeuge) an den Aufnahmekörper 21 angeordnet werden, entweder unmittelbar oder mittelbar mittels des Adapterkörpers 42.

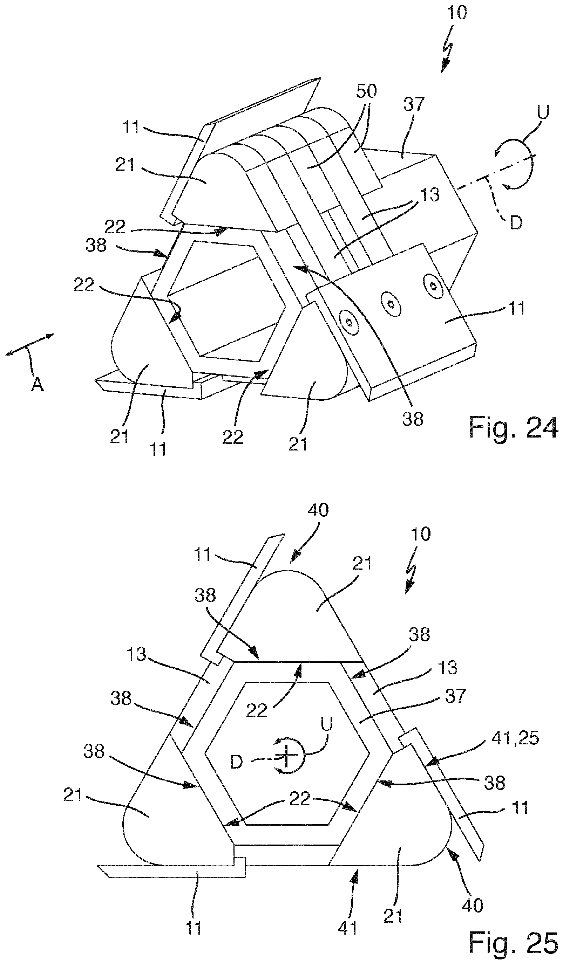

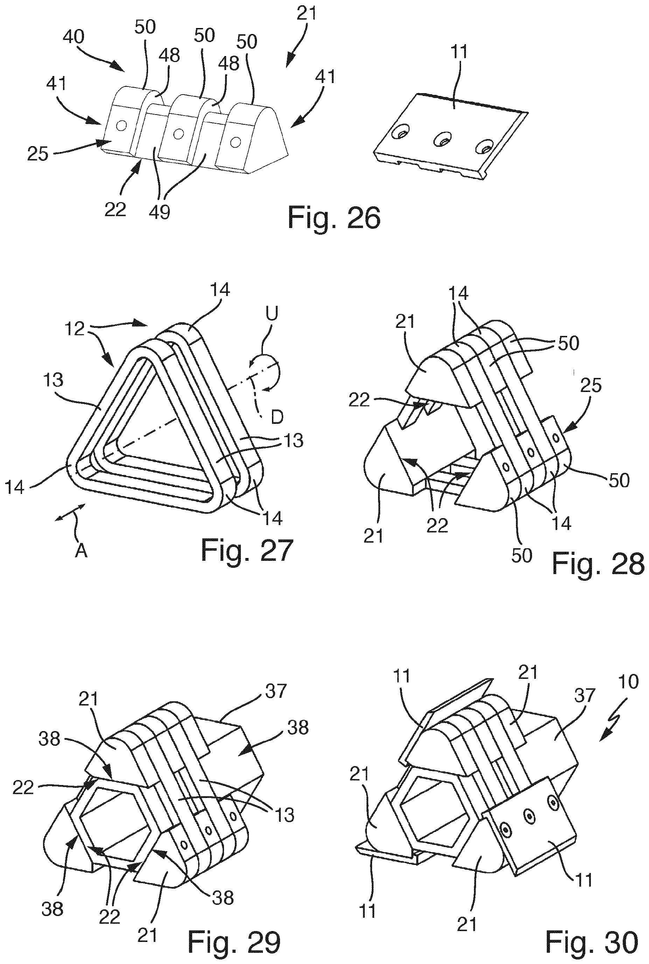

Die Figuren 24 und 25 zeigen ein weiteres Ausführungsbeispiel der Trägerbaugruppe 10, das ähnlich aufgebaut ist wie das Ausführungsbeispiel gemäß den Figuren 17 und 18, so dass auf die vorstehende Beschreibung Bezug genommen werden kann. Der Unterschied zwischen den Ausführungsbeispielen besteht hauptsächlich in der Ausgestaltung des Aufnahmekörpers 21. Figur 26 zeigt das Ausführungsbeispiel des Aufnahmekörpers. Analog zu dem Ausführungsbeispiel gemäß Figur 19 oder Figur 20 weist der Aufnahmekörper eine Grundfläche 22 auf, die sich beispielsgemäß in einer Ebene erstreckt. Die Flanken 41 und der Scheitel 40 erstrecken sich in Axialrichtung A nicht entlang einer Geraden oder Ebene, sondern sind gestuft ausgeführt. Der Aufnahmekörper 21 weist wenigstens eine und beispielsgemäß zumindest zwei sich entlang der einen Flanke 41 über den Scheitel 40 und weiter entlang der jeweils anderen Flanke 41 erstreckende nutähnliche Vertiefung 48 auf. Jede nutähnliche Vertiefung 48 hat einen Boden 49, der durch zwei in Axialrichtung A mit Abstand angeordnete Seitenflanken begrenzt ist.

Die Kontur des Bodens 49 ist vorzugsweise an die Innenkontur des Zwischenraums 39 angepasst und entspricht beispielsgemäß dem Innenradius eines gekrümmten Verbindungsabschnitts 14 und dem Verlauf der sich daran anschließenden Endbereiche der Stegabschnitte 13. Die sich an die Vertiefungen 48 in Axialrichtung A anschließenden hervorspringenden Abschnitte 50 sind bei hergestellter Trägerbaugruppe 10 in Axialrichtung A benachbart zu einem oder mehreren Verbindungsabschnitten 14 eines oder mehrerer Hohlkörper 12 angeordnet, die an dem Boden 49 anliegen und jeweils in einer Vertiefung 48 aufgenommen werden oder zumindest teilweise dort hineinragen. Der Aufnahmekörper 21 gemäß Figur 26 wird somit durch zwei Hohlkörper in Zusammenarbeit mit dem Stützkörper 37 der Stützeinheit 30 gehalten.

In Abwandlung zu der dargestellten Ausführungsform könnte eine Vertiefung 48 an einer Axialseite offen sein und nur an der jeweils anderen Axialseite durch eine Seitenflanke im Anschluss an den Boden 49 begrenzt sein.

An wenigstens einer Flanke 41 und insbesondere an den hervorspringenden Abschnitten 50 können eine oder mehrere Aufnahmen 25 für ein Bauteil 11 gebildet sein. Beispielsweise kann ein einziges Bauteil 11 an der Aufnahme 25 des Aufnahmekörpers 21 angebracht werden, wie es in Figur 26 veranschaulicht ist. Alternativ dazu könnten auch mehrere schmale Bauteile 11 und beispielsgemäß zwei oder drei Bauteile 11 an jeweils einem hervorspringenden Abschnitt 50 angeordnet werden.

Die Trägerbaugruppe 10 gemäß den Figuren 24 bis 26 kann hergestellt werden, wie es schematisch in den Figuren 27 bis 30 veranschaulicht ist. Die Hohlkörper 12 bilden bei diesem Ausführungsbeispiel vorzugsweise lediglich eine einzige Gruppe und sind alle in derselben Drehorientierung um die Drehachse D angeordnet (Figur 27). Im Anschluss daran werden mehrere Aufnahmekörper 21 und beispielsgemäß drei Aufnahmekörper 21 an beispielsgemäß allen Verbindungsbereichen 14 der Hohlkörper 12 angeordnet, so dass die Verbindungsbereiche in den Vertiefungen 48 angeordnet sind. Die Grundflächen 22 der Aufnahmekörper 21 sind der Drehachse D zugewandt (Figur 28). Im Anschluss kann der Stützkörper 37 entlang der Drehachse D in Axialrichtung A eingeschoben werden, so dass jede Grundfläche 22 eines Aufnahmekörpers 21 an einer zugeordneten Flachseite 38 des Stützkörpers 37 anliegt. Optional kann jeder Stegabschnitt 13 ebenfalls an einer der Flachseiten 38 des Stützkörpers 37 anliegen (vergleiche Figur 25). Die Aufnahmekörper 21 sind nach dem Einschieben des Stützkörpers 37 fixiert. An den Aufnahmekörpern 21 können dann die Bauteile 11 angebracht werden (Figur 30).

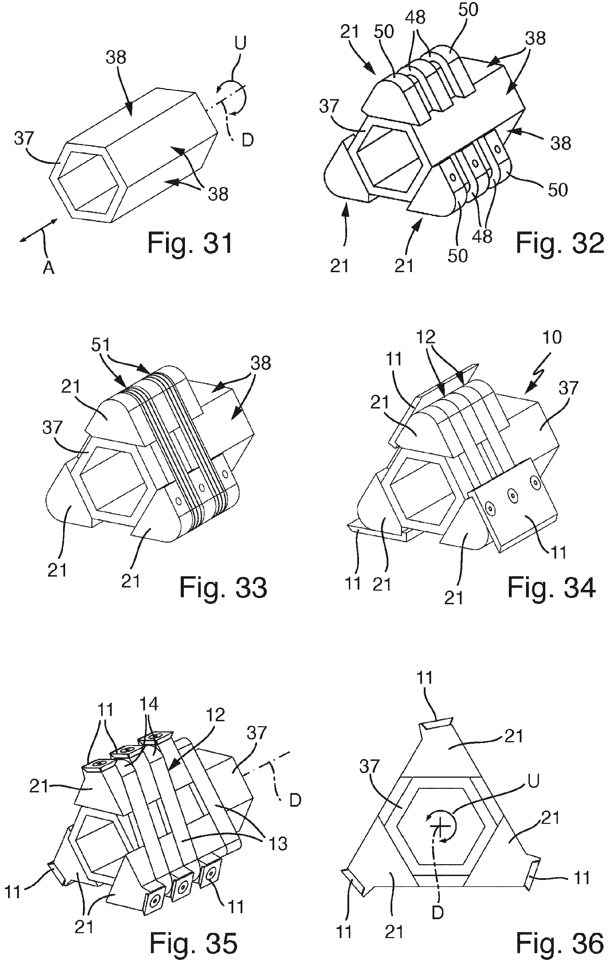

Bei den bisher beschriebenen Ausführungsbeispielen wurden die Hohlkörper 12 als fertig hergestellte Bauteile bereitgestellt. Es ist alternativ hierzu ebenfalls möglich, den wenigstens einen Hohlkörper 12 erst bei der Herstellung der Trägerbaugruppe 10 fertigzustellen. Beispielsweise kann bei dem Ausführungsbeispiel der Trägerbaugruppe 10 gemäß den Figuren 24 bis 26 zunächst der Stützkörper 37 bereitgestellt werden (Figur 31) und anschließend werden die Aufnahmekörper 21 an jeweils eine Flachseite 38 des Stützkörpers 37 aufgesetzt (Figur 32). Dabei fluchten die nutförmigen Vertiefungen 48 in Umfangsrichtung U um die Drehachse D. In die mehreren und beispielsgemäß drei in Umfangsrichtung U fluchtenden Vertiefungen 48 wird jeweils ein Verstärkungsfaserstrang 51 aus einer Vielzahl von einzelnen Verstärkungsfasern gewickelt, vorzugsweise in mehreren Windungen in Umfangsrichtung U um die Drehachse D. Der Verstärkungsfaserstrang 51 kann durch ein Roving gebildet sein. Der Verstärkungsfaserstrang 51 bzw. die Vielzahl an Verstärkungsfasern des Verstärkungsfaserstrangs 51 können mit einem nicht ausgehärteten Kunststoff getränkt bzw. imprägniert sein. Das Tränken oder Imprägnieren kann vor dem Umwickeln oder nach dem Umwickeln durchgeführt werden. Die getränkten bzw. imprägnierten Verstärkungsfaserstränge 51 werden dann ausgehärtet, beispielsweise durch physikalische und/oder chemische Einwirkung, beispielsweise durch Wärmeeintrag oder Bestrahlung mit Licht in einem vorgegebenen Wellenlängenbereich (zum Beispiel UV-Licht). Durch das Aushärten wird jeweils ein Hohlkörper 12 gebildet. Anschließend können die Bauteile 11 und beispielsgemäß die Schneidwerkzeuge an den Aufnahmekörpern 21 angebracht werden (Figur 34) .

In den Figuren 35 und 36 ist eine weitere Ausführungsform der Trägerbaugruppe 10 veranschaulicht. Die Trägerbaugruppe 10 entspricht im Wesentlichen dem Ausführungsbeispiel gemäß den Figuren 31 bis 34, wobei die Vertiefungen 48 in den Aufnahmekörpern 21 entlang einer Schraubenlinie um die Drehachse D angeordnet sind. Dadurch kann ein schraubenförmiger Hohlkörper 12 hergestellt und in den Vertiefungen 48 angeordnet werden. Wie beim vorher beschriebenen Ausführungsbeispiel können zunächst die Aufnahmekörper 21 an dem Stützkörper 37 angeordnet und anschließend ein Verstärkungsfaserstrang 51 aus einer Vielzahl von Verstärkungsfasern schraubenförmig um die Drehachse D durch sämtliche Vertiefungen 48 der Aufnahmekörper 21 gewickelt werden. Es können eine oder mehrere schraubenförmige Umwicklungen hergestellt werden. Der Verstärkungsfaserstrang 51 wurde vorher oder wird anschließend mit einem Kunststoff getränkt bzw. imprägniert, der nach dem Umwickeln ausgehärtet werden kann, um einen starren, schraubenförmigen Hohlkörper 12 zu bilden. Abgesehen von der hier schraubenförmigen oder helixförmigen Gestalt wird der Hohlkörper analog zu dem vorher beschriebenen Ausführungsbeispiel gemäß den Figuren 31 bis 34 hergestellt.

Schließlich können ein oder mehrere Bauteile 11 und beispielsgemäß Schneidwerkzeuge an jedem Aufnahmekörper 21 angeordnet werden.

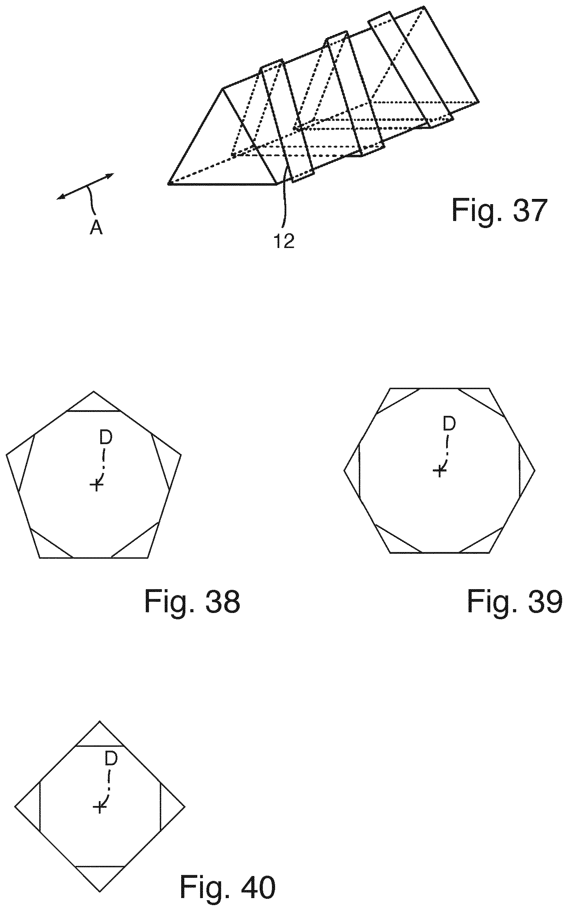

In Figur 37 ist das Prinzip eines schraubenförmig um die Drehachse D gewickelten bzw. verlaufenden Hohlkörpers 12 veranschaulicht. Die Scheitel 40 der Aufnahmekörper 21 sind hier durch in Axialrichtung A verlaufende Kanten eines Prismas veranschaulicht. Der Verlauf des schraubenförmigen Hohlkörpers 12 ist durch ein sich um das Prisma windendes Band stark schematisiert dargestellt.

In den Figuren 38 bis 40 ist anhand eines jeweiligen Prinzipbildes gezeigt, dass die Trägerbaugruppe in einer Ebene rechtwinklig zur Drehachse D unterschiedliche prismatische Konturen aufweisen kann und vorzugsweise jeweils ein regelmäßiges Polygon mit beispielsweise vier, fünf oder sechs Ecken bilden kann. Eine im Wesentlichen dreieckige Kontur, wie es anhand der Ausführungsbeispiele gemäß den Figuren 1 bis 37 erläutert wurde, ist nicht zwingend notwendig. Sowohl die Hohlkörper 12, als auch der optional vorhandene Stützkörper 37 können in einer Ebene rechtwinklig zur Drehachse D betrachtet beliebige polygonale und insbesondere regelmäßige polygonale Konturen aufweisen.

### Bezugszeichenliste:

- 10: Trägerbaugruppe
- 11: Bauteil
- 12: Hohlkörper
- 13: Stegabschnitt
- 14: Verbindungsabschnitt

- 17: erste Gruppe
- 18: zweite Gruppe

- 21: Aufnahmekörper
- 22: Grundfläche des Aufnahmekörpers
- 23: Außenfläche des Stegabschnitts
- 24: zentraler Teil
- 25: Aufnahme
- 26: Loch

- 30: Stützeinheit
- 31: Haltekörper
- 32: Stift
- 33: Stützstelle
- 35: Spannkörper

- 37: Stützkörper
- 38: Flachseite
- 39: Zwischenraum
- 40: Scheitel des Aufnahmekörpers
- 41: Flanke des Aufnahmekörpers
- 42: Adapterkörper
- 43: Fußteil
- 44: Freiraum
- 48: Vertiefung des Aufnahmekörpers
- 49: Boden der Vertiefung
- 50: hervorspringender Abschnitt
- 51: Verstärkungsfaserstrang

- α: Drehwinkel

- A: Axialrichtung
- D: Drehachse
- U: Umfangsrichtung

## Patentansprüche

1. Trägerbaugruppe (10), insbesondere Werkzeugträgerbaugruppe, die zum Anordnen wenigstens eines Bauteils (11) eingerichtet ist und dazu eingerichtet ist, drehend um eine Drehachse (D) angetrieben zu werden ,
mit mehreren Hohlkörpern (12), die in einer Axialrichtung (A) parallel zur Drehachse (D) nebeneinander angeordnet sind und die Drehachse (D) jeweils umschließen, und die mehrere Stegabschnitte (13) aufweisen, wobei jeweils zwei unmittelbar benachbarte Stegabschnitte (13) unter Bildung eines gekrümmten Verbindungsabschnitts (14) miteinander verbunden sind,
mit einer Stützeinheit (30), an der sich jeder Hohlkörper (12) an mehreren in Umfangsrichtung um die Drehachse (D) beabstandeten Stützstellen (33) abstützt,
**dadurch gekennzeichnet, dass** die Trägerbaugruppe (10) wenigstens einen Aufnahmekörper (21) aufweist, der zum Anbringen des wenigstens einen Bauteils (11) eingerichtet ist, wobei jeder Aufnahmekörper (21) mittels eines oder mehrerer der Hohlkörper (12) an der Stützeinheit (30) und/oder an einem Stegabschnitt (13) eines der Hohlkörper (12) gehalten ist.

2. Trägerbaugruppe nach Anspruch 1, wobei jeder Aufnahmekörper (21) unmittelbar an einem der Hohlkörper (12) befestigt ist.

3. Trägerbaugruppe nach Anspruch 2, wobei jeder Aufnahmekörper (21) zusätzlich an der Stützeinheit (30) abgestützt ist.

4. Trägerbaugruppe nach Anspruch 1, wobei sich jeder Aufnahmekörper (21) an einem sich koaxial zur oder entlang der Drehachse (D) erstreckenden Stützkörper (37) der Stützeinheit (30) radial zur Drehachse (D) abstützt und mittels der Hohlkörper (12) am Stützkörper (37) gehalten ist.

5. Trägerbaugruppe nach einem der vorhergehenden Ansprüche, wobei die Stützeinheit (30) einen in Axialrichtung (A) neben den Hohlkörpern (12) angeordneten Haltekörper (31) aufweist.

6. Trägerbaugruppe nach Anspruch 5, wobei die Stützeinheit (30) mehrere sich in Axialrichtung (A) mit Abstand zur Drehachse (D) erstreckende Stifte (32) aufweist, die jeweils an einem Ende mit dem Haltekörper (31) verbunden sind.

7. Trägerbaugruppe nach Anspruch 5 oder 6, wobei mehreren oder allen Stegabschnitten (13) von wenigstens einem der Hohlkörper (12) jeweils einer der Stifte (32) zugeordnet ist, wobei sich dieser Stift (32) durch wenigstens einen Aufnahmekörper (21) von dem wenigstens einen Aufnahmekörper (21) erstreckt.

8. Trägerbaugruppe nach einem der vorhergehenden Ansprüche, wobei die Stützeinheit (30) einen sich koaxial zur oder entlang der Drehachse (D) erstreckenden Stützkörper (37) aufweist.

9. Trägerbaugruppe nach Anspruch 8, wobei der Stützkörper (37) eine Kontur mit in Umfangsrichtung (U) um die Drehachse (D) regelmäßig verteilt angeordneten Flachseiten (38) aufweist, wobei sich jede Flachseite (38) in Axialrichtung (A) entlang aller Hohlkörper (12) erstreckt.

10. Trägerbaugruppe nach Anspruch 8 oder 9, wobei der Stützkörper (37) an den Stegabschnitten (13) jedes Hohlkörpers (12) anliegt und einen Abstand zu den Verbindungsabschnitten (14) jedes Hohlkörpers (12) aufweist.

11. Trägerbaugruppe nach einem der vorhergehenden Ansprüche, wobei alle Hohlkörper (12) dieselbe Anzahl an Stegabschnitten (13) und gekrümmten Verbindungsabschnitten (14) aufweisen.

12. Trägerbaugruppe nach einem der vorhergehenden Ansprüche, wobei eine erste Gruppe (17) und eine zweite Gruppe (18) vorhanden ist, wobei jede Gruppe (17, 18) wenigstens einen Hohlkörper (12) aufweist und wobei der wenigstens eine Hohlkörper (12) der ersten Gruppe (17) gegenüber dem wenigstens einen Hohlkörper (12) der zweiten Gruppe (18) in einer Umfangsrichtung (U) um die Drehachse (D) um einen Drehwinkel (α) versetzt ist.

13. Verfahren zur Herstellung einer Trägerbaugruppe (10) nach einem der vorhergehenden Ansprüche umfassend folgende Schritte:
- Bereitstellen der Stützeinheit (30),
- Anordnen des wenigstens einen Aufnahmekörpers (21) an der Stützeinheit (30) und/oder an einem der Hohlkörper (12),
- Anordnen der Hohlkörper (12) um die Drehachse (D) an der Stützeinheit (30), derart, dass jeder Aufnahmekörper (21) an einem Stegabschnitt (13) eines der Hohlkörper (12) und/oder an der Stützeinheit (30) gehalten ist, und
- Anbringen des wenigstens einen Bauteils (11) an dem wenigstens einen Aufnahmekörper (21).

14. Trägerbaugruppe (10), insbesondere Werkzeugträgerbaugruppe, die zum Anordnen wenigstens eines Bauteils (11) eingerichtet ist und dazu eingerichtet ist, drehend um eine Drehachse (D) angetrieben zu werden,
mit einem Hohlkörper (12), der mehrere Stegabschnitte (13) aufweist, wobei jeweils zwei unmittelbar benachbarte Stegabschnitte (13) unter Bildung eines gekrümmten Verbindungsabschnitts (14) miteinander verbunden sind,
und mit einer sich in Axialrichtung (A) erstreckenden Stützeinheit (30),
**dadurch gekennzeichnet, dass** sich der Hohlkörper (12) schraubenförmig um die Drehachse (D) erstreckt und dass die Trägerbaugruppe (10) wenigstens einen Aufnahmekörper (21) aufweist, der zum Anbringen des wenigstens einen Bauteils (11) eingerichtet ist, wobei jeder Aufnahmekörper (21) durch den Hohlkörper (12) an der Stützeinheit (30) gehalten ist.

15. Verfahren zur Herstellung einer Trägerbaugruppe (10) nach einem der Ansprüche 1 bis 12 oder 14 umfassend folgende Schritte:
- Bereitstellen des Stützkörper (37),
- Anordnen des wenigstens einen Aufnahmekörpers (21) an dem Stützköper (37),
- Wickeln wenigstens eines Faserstranges (51) um die Drehachse (D) und um jeden an dem Stützkörper (37) angeordneten Aufnahmekörper (21) derart, dass jeder Aufnahmekörper (21) an dem Stützkörper (37) gehalten ist,
- Aushärten des mit einem Kunststoff imprägnierten oder getränkten Faserstranges (51) und
- Anbringen des wenigstens einen Bauteils (11) an dem wenigstens einen Aufnahmekörper (21).

## Claims

1. Support assembly (10), particularly tool support assembly, configured for arranging at least one component (11) and configured to be rotatingly driven around a rotation axis (D),
having multiple hollow bodies (12), which are arranged adjacent to one another in an axial direction (A) parallel to the rotation axis (D) and which surround the rotation axis (D) and which comprise multiple web sections (13), wherein respectively two directly adjacent web sections (13) are connected with one another forming a curved connection section (14),
having a support unit (30) on which each hollow body (12) is supported at multiple support positions (33) that are distanced in circumferential direction around the rotation axis (D),
**characterized in that** the support assembly (10) comprises at least one holding body (21) that is configured for arrangement of the at least one component (11), wherein each holding body (21) is held by means of one or more of the hollow bodies (12) on the support unit (30) and/or on a web section (13) of one of the hollow bodies (12).

2. Support assembly according to claim 1, wherein each holding body (21) is directly attached to one of the hollow bodies (12).

3. Support assembly according to claim 2, wherein each holding body (21) is additionally supported on the support unit (30).

4. Support assembly according to claim 1, wherein each holding body (21) is supported on a bearer body (37) of support unit (30) radial to the rotation axis (D) and is held by means of the hollow bodies (12) on bearer body (21), wherein bearer body (37) extends coaxially or along the rotation axis (D).

5. Support assembly according to any of the preceding claims, wherein the support unit (30) comprises a holding body (31) arranged adjacent to the hollow bodies (12) in axial direction (A).

6. Support assembly according to claim 5, wherein the support unit (30) comprises multiple pins (32), which extend in axial direction (A) with distance to the rotation axis (D) and which are connected to the holding body (31) at one end respectively.

7. Support assembly according to claim 5 or 6, wherein one of the pins (32) is assigned to multiple or all of the web sections (13) of at least one of the hollow bodies (12) respectively, wherein this pin (32) extends through at least one holding body (21) of the at least one holding body (21).

8. Support assembly according to any of the preceding claims, wherein the support unit (30) comprises a bearer body (37) extending coaxially or along the rotation axis (D) .

9. Support assembly according to claim 8, wherein the bearer body (37) has a contour with flat sides (38) arranged in circumferential direction (U) around the rotation axis (D) in a regularly distributed manner, wherein each flat side (38) extends in axial direction (A) along all of the hollow bodies (12).

10. Support assembly according to claim 8 or 9, wherein the bearer body (37) is in contact with the web sections (13) of each hollow body (12) and has a distance to the connection sections (14) of each hollow body (12).

11. Support assembly according to any of the preceding claims, wherein all of the hollow bodies (12) have the same number of web sections (13) and curved connection sections (14).

12. Support assembly according to any of the preceding claims, wherein a first group (17) and a second group (18) is provided, wherein each group (17, 18) comprises at least one hollow body (12) and wherein the at least one hollow body (12) of the first group (17) is arranged offset about a rotation angle (α) in circumferential direction (U) around the rotation axis (D) compared to the at least one hollow body (12) of the second group (18) .

13. Method for production of a support assembly (10) according to any of the preceding claims comprising the following steps:
- providing of the support unit (30),
- arranging the at least one holding body (21) on the support unit (30) and/or on one of the hollow bodies (12),
- arranging the hollow bodies (12) around the rotation axis (D) on the support unit (30), so that each holding body (21) is held on a web section (13) of one of the hollow bodies (12) and/or on the support unit (30) and
- arranging the at least one component (11) on the at least one holding body (21).

14. Support assembly (10), particularly tool support assembly, which is configured for arranging at least one component (11) and which is configured to be rotatingly driven around a rotation axis (D),
having a hollow body (12) comprising multiple web sections (13), wherein respectively two directly adjacent web sections (13) are connected with one another forming a curved connection section (14),
and having a support unit (30) extending in axial direction (A), **characterized in that** the hollow body (12) extends helically around the rotation axis (D) and that the support assembly (10) comprises at least one support body (21) that is configured for arranging the at least one component (11),
wherein each holding body (21) is held by means of the hollow body (12) on the support unit (30).

15. Method for producing a support assembly (10) according to one of the claims 1-12 or 14 comprising the following steps:
- providing the bearer body (37),
- arranging the at least one holding body (21) on the bearer body (37),
- winding at least one fiber strand (51) around the rotation axis (D) and around each holding body (21) arranged on the bearer body (37), so that each holding body (21) is held on the bearer body (37),
- curing the fiber strand (51) soaked or saturated with a plastic and
- attaching the at least one component (11) on the at least one holding body (21).

## Revendications

1. Module de support (10), en particulier module porte-outil, qui est agencé pour la mise en place d'au moins un composant (11) et est agencé pour être entraîné en rotation autour d'un axe de rotation (D),
comprenant plusieurs corps creux (12) qui sont disposés les uns à côté des autres, dans une direction axiale (A) parallèle à l'axe de rotation (D), et entourent respectivement l'axe de rotation (D), et qui présentent plusieurs parties formant branches (13), sachant que chaque fois deux parties formant branches (13) directement adjacentes sont reliées entre elles en formant une partie de liaison (14) incurvée,
comprenant une unité d'appui (30) sur laquelle s'appuie chaque corps creux (12), en plusieurs points d'appui (33) espacés dans la direction périphérique autour de l'axe de rotation (D),
**caractérisé en ce que** le module de support (10) présente au moins un corps de montage (21) qui est agencé en vue de la fixation du composant (11), au nombre d'au moins un, chaque corps de montage (21) étant tenu par un ou plusieurs des corps creux (12) sur l'unité d'appui (30) et/ou sur une partie formant branche (13) de l'un des corps creux (12).

2. Module de support selon la revendication 1, dans lequel chaque corps de montage (21) est fixé directement à l'un des corps creux (12).

3. Module de support selon la revendication 2, dans lequel chaque corps de montage (21) prend en outre appui sur l'unité d'appui (30).

4. Module de support selon la revendication 1, dans lequel chaque corps de montage (21) est en appui, radialement par rapport à l'axe de rotation (D), sur un corps d'appui (37) de l'unité d'appui (30) qui s'étend coaxialement avec l'axe de rotation (D) ou le long de celui-ci, et est maintenu sur le corps d'appui (37) au moyen des corps creux (12).

5. Module de support selon l'une des revendications précédentes, dans lequel l'unité d'appui (30) présente un corps de maintien (31) disposé à côté des corps creux (12) dans la direction axiale (A).

6. Module de support selon la revendication 5, dans lequel l'unité d'appui (30) présente plusieurs tiges (32) qui s'étendent dans la direction axiale (A), en étant espacées de l'axe de rotation (D), et qui sont reliées chacune par une extrémité au corps de maintien (31).

7. Module de support selon la revendication 5 ou 6, dans lequel l'une des tiges (32) est respectivement associée à plusieurs ou à l'ensemble des parties formant branches (13) d'au moins un des corps creux (12), ladite tige (32) s'étendant à travers au moins un corps de montage (21) parmi le corps de montage (21), au nombre d'au moins un.

8. Module de support selon l'une des revendications précédentes, dans lequel l'unité d'appui (30) présente un corps d'appui (37) qui s'étend de manière coaxiale avec l'axe de rotation (D) ou le long de celui-ci.

9. Module de support selon la revendication 8, dans lequel le corps d'appui (37) présente un contour comportant des côtés plats (38) qui sont disposés en étant uniformément répartis dans la direction périphérique (U) autour de l'axe de rotation (D), chaque côté plat (38) s'étendant dans la direction axiale (A), le long de tous les corps creux (12).

10. Module de support selon la revendication 8 ou 9, dans lequel le corps d'appui (37) est appliqué contre les parties formant branches (13) de chaque corps creux (12) et présente une distance par rapport aux parties de liaison (14) de chaque corps creux (12).

11. Module de support selon l'une des revendications précédentes, dans lequel tous les corps creux (12) présentent le même nombre de parties formant branches (13) et de parties de liaison (14) incurvées.

12. Module de support selon l'une des revendications précédentes, dans lequel il est prévu un premier groupe (17) et un deuxième groupe (18), chaque groupe (17 ,18) présentant au moins un corps creux (12), et le corps creux (12), au nombre d'au moins un, du premier groupe (17) étant décalé, dans une direction périphérique (U) autour de l'axe de rotation (D), d'un angle de rotation (α) par rapport au corps creux (12), au nombre d'au moins un, du deuxième groupe (18).

13. Procédé de fabrication d'un module de support (10) selon l'une des revendications précédentes, comprenant les étapes suivantes :
- mise à disposition de l'unité d'appui (30),
- mise en place du corps de montage (21), au nombre d'au moins un, sur l'unité d'appui (30) et/ou sur l'un des corps creux (12),
- mise en place des corps creux (12) autour de l'axe de rotation (D), sur l'unité d'appui (30), de manière à ce que chaque corps de montage (21) soit tenu sur une partie formant branche (13) de l'un des corps creux (12) et/ou sur l'unité d'appui (30), et
- mise en place du composant (11), au nombre d'au moins un, sur le corps de montage (21), au nombre d'au moins un.

14. Module de support (10), en particulier module porte-outil, qui est agencé pour la mise en place d'au moins un composant (11) et est agencé pour être entraîné en rotation autour d'un axe de rotation (D),
comprenant un corps creux (12) qui présente plusieurs parties formant branches (13), sachant que chaque fois deux parties formant branches (13) directement adjacentes sont reliées entre elles en formant une partie de liaison (14) incurvée,
et comprenant une unité d'appui (30) qui s'étend dans la direction axiale (A),
**caractérisé en ce que** le corps creux (12) s'étend en forme d'hélice autour de l'axe de rotation (D) et **en ce que** le module de support (10) présente au moins un corps de montage (21) qui est agencé en vue de la fixation du composant (11), au nombre d'au moins un, chaque corps de montage (21) étant tenu par le corps creux (12) sur l'unité d'appui (30).

15. Procédé de fabrication d'un module de support (10) selon l'une des revendications 1 à 12 ou 14, comprenant les étapes suivantes :
- mise à disposition du corps d'appui (37),
- mise en place du corps de montage (21), au nombre d'au moins un, sur le corps d'appui (37),
- enroulement d'au moins un faisceau de fibres (51) autour de l'axe de rotation (D) et autour de chaque corps de montage (21) disposé sur le corps d'appui (37), de manière à ce que chaque corps de montage (21) soit tenu sur le corps d'appui (37),
- durcissement du faisceau de fibres (51) imprégné ou imbibé avec une matière synthétique, et
- mise en place du composant (11), au nombre d'au moins un, sur le corps de montage (21), au nombre d'au moins un.
